# EUROPÄISCHE PATENTSCHRIFT

(11) **EP 2 686 633 B1**
(45) Veröffentlichungstag und Bekanntmachung des Hinweises auf die Patenterteilung: **25.06.2014**
(21) Anmeldenummer: 12709615.4
(22) Anmeldetag: 14.03.2012
(51) Int. Cl.: F28D 20/02, F24D 11/02, F24D 19/10

(54) **LATENTWÄRMESPEICHER UND ENERGIESPEICHERSYSTEM MIT DERARTIGEN LATENTWÄRMESPEICHERN**
LATENT HEAT STORAGE AND ENERGY STORAGE SYSTEM COMPRISING SUCH A LATENT HEAT STORAGE
ACCUMULATEUR DE CHALEUR LATENTE ET SYSTÈME DE STOCKAGE D'ENERGIE AVEC UN TEL ACCUMULATEUR

(30) Priorität: 15.03.2011 DE 102011001273
(43) Veröffentlichungstag der Anmeldung: 22.01.2014
(73) Patentinhaber: isocal HeizKühlsysteme GmbH, 71636 Ludwigsburg (DE)
(72) Erfinder: VON ROHR, Alexander, 88045 Friedrichshafen (DE)
(74) Vertreter: Kaufmann, Ursula Josefine
(86) Internationale Anmeldenummer: PCT/EP2012/054489
(87) Internationale Veröffentlichungsnummer: WO 2012/123508

(56) Entgegenhaltungen:
- EP-A1- 1 577 548
- DE-A1- 2 916 514
- US-A- 3 569 669
- US-A- 4 023 043
- US-A- 5 467 812
- US-A1- 2009 105 888
- US-A1- 2010 204 849
- US-B1- 6 400 896

## Beschreibung

### Stand der Technik

Die Erfindung betrifft einen Latentwärmespeicher und ein Energiespeichersystem mit derartigen Latentwärmespeichern.

Die bisher bekannten Latentwärmespeicher erfüllen den Zweck der direkten Wärmeversorgung eines Verbrauchers. Eine zusätzliche elektrische Heizeinheit wird im Falle einer Unterversorgung des Speichers gezielt genutzt, um elektrisch nachzuheizen und das System somit weiter betreiben zu können. So ist aus der DE 29 16 514 A1 ein Latentwärmespeicher bekannt, bei dem ein üblicher Wärmeübertrager zum Wärmeeintrag mit einem Sonnenkollektor gekoppelt ist. Zusätzlich ist eine elektrische Heizeinheit vorgesehen, welche bei nicht ausreichender Sonneneinstrahlung als Zusatzheizung und zum schnelleren Aufschmelzen des Latentwärmespeichermediums dient.

Eine Aufgabe der Erfindung ist es, einen Latentwärmespeicher so weiterzuentwickeln, dass dieser einerseits für kleinere Einheiten wirtschaftlich einsetzbar ist und dass andererseits dessen Speicherkapazität vorteilhaft nutzbar ist.

Eine weitere Aufgabe besteht darin, ein Energiespeichersystem mit mehreren Latentwärmespeichern mit hoher Speicherkapazität zu schaffen.

Die Aufgaben werden durch die Merkmale der unabhängigen Ansprüche gelöst.

Vorteilhafte Ausgestaltungen der Erfindung sind den weiteren Ansprüchen, der Zeichnung und der Beschreibung zu entnehmen.

Gemäß einem ersten Aspekt der Erfindung wird ein Latentwärmespeicher vorgeschlagen, umfassend ein Gehäuse mit einem Speichermedium und wenigstens eine erste Wärmetauscheranordnung in Kontakt mit dem Speichermedium, wobei die wenigstens erste Wärmetauscheranordnung ein erstes Wärmeträgermedium aufweist. Eine elektrische Heizeinheit ist zum Aufheizen des Speichermediums vorgesehen. Die elektrische Heizeinheit ist im Fall elektrischer Überkapazität in einem elektrischen Energieversorgungsnetz zur Aufnahme elektrischer Energie ansteuerbar und von ihrer Auslegung her für einen regulären Betrieb im Latentwärmespeicher, verglichen mit anderen Wärmetauscheranordnungen, die im Normalbetrieb Wärme in den Latentwärmespeicher einbringen, deutlich überdimensioniert. Dabei sind eine oder mehrere Wärmetauscheranordnungen vorgesehen, die im Normalbetrieb Wärme in den Latentwärmespeicher einbringen.

Der Latentwärmespeicher kann günstigerweise Bestandteil eines Hausversorgungssystems, etwa eines Einfamilienhauses oder eines Mehrfamilienhauses sein. Beispielsweise kann der Latentwärmespeicher ein in der Erde vergrabener Eisspeicher sein, wie er in der EP 1 807 672 B1 oder der DE 10 2010 037 474 A1 beschrieben ist.

Das Speichermedium führt im Betriebsbereich des Latentwärmespeichers einen Phasenübergang unter Abgabe bzw. Aufnahme von Latentwärme durch, d.h. das Speichermedium ändert unter Freisetzung oder Aufnahme latenter Wärme seinen Aggregatszustand. Am Phasenübergang oder in der Nähe des Phasenübergangs kann das Speichermedium vorteilhaft eine hohe Wärmeleistung aufnehmen, ohne die Temperatur des Speichermediums drastisch zu erhöhen.

Bei der erfindungsgemäßen Kombination aus Latentwärmespeicher, insbesondere Eisspeicher, und elektrischer Heizeinheit hat der Heizstab, anders als im Stand der Technik, keine Bedeutung in Bezug auf die Betriebssicherheit des Latentwärmespeichers. Es kann ausschließlich kostenloser, oder zu negativen Preisen zur Verfügung stehender, Strom aus Überkapazitäten eines Energieversorgungsnetzes genutzt werden. Dadurch wird die Vorhaltung eines beliebig großen Speichervolumens (Latentwärme-Speichermedium, z.B. Eis) zur Aufnahme von kurzfristig zur Verfügung stehenden elektrischen Überkapazitäten erreicht.

Das hierfür verwendete Speichermedium kann ohne energetischen Aufwand erzeugt werden und steht dann zur Verfügung, wenn statistisch die größten Überkapazitäten entstehen, wie das im Winter der Fall ist. Es kann vorteilhaft dem Prozess der Beheizung eines Gebäudes mittels einer Wärmepumpe entstammen, wie in der EP 1 807 672 B1 oder der DE 10 2010 037 474 A1 beschrieben, und bleibt als thermisches Abfallprodukt zurück.

Der Latentwärmespeicher in seiner üblichen, bekannten Form ist in erster Linie eine Wärmequelle für Wärmepumpen. Die erfindungsgemäße Kombination mit der Möglichkeit der Einspeisung von elektrischen Überkapazitäten bietet dagegen mehrere Vorteile, die im Stand der Technik nicht erreicht werden können.

Zum einen können elektrische Überkapazitäten gezielt mit sehr hohen Leistungen "entsorgt" bzw. zwischengespeichert werden. Es müssen keine "negativen Strompreise" für die Abnahme von Überlasten bezahlt werden. Der Stromkunde wird dauerhaft entlastet. Die Stromnetze werden entlastet. Die Gefahr von Schäden durch elektrische Überlast wird reduziert.

Zum anderen können regenerative Kraftwerke (Wind, Photovoltaik...) auch in Gegenden gebaut werden, die keine auf Stromspitzen ausgelegte Infrastruktur besitzen. Dem weiteren Ausbau regenerativer Kraftwerke steht nichts mehr im Wege.

Ferner bewirkt der in Wärme umgewandelte Strom eine Erhöhung der Effizienz der an den Speicher angeschlossenen Wärmepumpen. Diese benötigen in den Tagen nach der Einspeisung weniger Strom. Der eingespeiste Strom ist nicht "entsorgt", sondern indirekt zwischengespeichert worden.

Weiterhin sind Latentwärmespeicher, z.B. Eisspeicher, bereits als Wärmequelle für Wärmepumpen vorhanden und können für den Einsatz als Stromzwischenspeicher genutzt werden. Kosten und Aufwand für die Stromeinspeisung sind daher sehr gering und mit einer hohen Wirtschaftlichkeit für Nutzer und Netzbetreiber verbunden.

Vorteilhaft kann die elektrische Heizeinheit eine hohe elektrische Leistung, insbesondere eine pulsartige hohe Leistung, in das Speichermedium einbringen. Die elektrische Heizeinheit ist zweckmäßigerweise so ausgelegt, dass sie nur betrieben wird, wenn ein insbesondere kurzfristiges Überangebot an elektrischer Leistung oder auch Energie in einem elektrischen Versorgungsnetz anfällt, das schnell abgebaut werden muss. Die elektrische Heizeinheit kann eine derartige elektrische Leistung sehr schnell aufnehmen. Die elektrische Heizeinheit kann eine Heizpatrone, eine Heizfolie, ein Heizdraht, ein Infrarotstrahler und dergleichen sein, ebenso sind Kombinationen von solchen Komponenten als Heizeinheit denkbar. Die Heizpatrone kann beispielsweise eine Heizpatrone sein, wie sie bei Wärmepumpen eingesetzt wird. Die Heizfolie kann eine Heizfolie sein, wie sie beispielsweise bei elektrischen Fußbodenheizungen eingesetzt wird.

Die Heizeinheit ist insbesondere von ihrer Auslegung her für einen regulären Normalbetrieb im Latentwärmespeicher, verglichen mit anderen Wärmetauschern, die im Normalbetrieb Wärme in den Latentwärmespeicher eintragen, deutlich überdimensioniert. Zweckmäßigerweise soll die Heizeinheit im Normalbetrieb nicht zum Einsatz kommen, sondern nur bei elektrischen Leistungs- bzw. Energiespitzen. Vielmehr wird der Latentwärmespeicher im Normalbetrieb mit den üblichen Wärmetauschern betrieben. Im Verhältnis zur entzogenen Wärmeleistung, etwa der Entzugsleistung einer an die erste Wärmetauscheranordnung ("Entzugswärmetauscher") angekoppelten Wärmepumpe, kann die Leistung der elektrischen Heizeinheit vorteilhaft wenigstens um einen Faktor 10, insbesondere um einen Faktor 10 bis 100, größer als die erste Wärmetauscheranordnung ausgelegt sein. Die eine oder mehrere Wärmetauscheranordnungen, die im Normalbetrieb Wärme in den Latentwärmespeicher einbringen, sind vorteilhaft so ausgelegt, dass sie etwa im gleichen Leistungsbereich wie die Entzugsleistung der Wärmepumpe liegen, günstigerweise etwas unterhalb der Entzugsleistung, bevorzugt bei etwa 50%, besonders bevorzugt bei etwa 80% der Entzugsleistung.

Für Einfamilienhäuser kann der maximale elektrische Anschlusswert der Heizeinheit bei ca. 50 kW liegen. Er wird begrenzt durch die im Gebäude zur Verfügung stehenden elektrischen Anschlussleistung an ein Stromversorgungsnetz. Für größere, industriell oder gewerblich genutzte Speicher kann die elektrische Anschlussleistung Werte von 10 MW und mehr erreichen.

Gemäß einer günstigen Ausgestaltung kann die elektrische Heizeinheit eine elektrische Anschlussleistung von mindestens 5 kW, insbesondere zwischen 5 und etwa 100 kW aufweisen. Vorteilhaft kann die elektrische Anschlussleistung nahe einer elektrischen Hausanschlussleistung liegen.

Damit kann die volle Aufnahmekapazität beispielsweise eines Hauses genutzt werden, ohne beispielsweise in Wohngebieten eine aufwändige zusätzliche elektrische Infrastruktur installieren zu müssen. Eine derartige Heizeinheit lässt sich daher gegebenenfalls auch bei einem bestehenden Latentwärmespeicher nachrüsten.

Gemäß einer günstigen Ausgestaltung kann die elektrische Heizeinheit in einem Bereich des Speichermediums angeordnet sein, in welchem dieses seinen Phasenübergang bei Normalbetrieb im Durchschnitt später als in einem zentralen Bereich innerhalb des Gehäuses oder gar nicht durchführt. Damit kann ein effizienter Eintrag von Wärmeenergie erreicht werden. Bei Wasser als Speichermedium kann dieses in der flüssigen Phase besser Wärmeenergie aufnehmen als in der festen Phase. Günstigerweise kann das Speichermedium Wasser sein. Denkbar sind jedoch auch andere Materialien denkbar, z.B. Paraffin, je nach gewünschtem Temperaturniveau des Speichermediums.

Gemäß einer günstigen Ausgestaltung kann die elektrische Heizeinheit in einem Überangebot elektrischer Leistung, d.h. Überkapazität; in einem elektrischen Energieversorgungsnetz zur Aufnahme elektrischer Leistung ansteuerbar sein. Vorteilhaft kann ein Energieversorger bei Erkennen einer Überkapazität in einem Stromversorgungsnetz, die elektrische Heizeinheit ansteuern, um einen Teil der Überkapazität aufzunehmen. Sinnvollerweise sind hierzu eine Vielzahl solcher Latentwärmespeichers zusammenschaltbar, die in Summe kurzzeitige sehr hohe elektrische Leistungen aufnehmen können. Solche Überkapazitäten sind bekannt und werden bisher so behandelt, dass die anfallende elektrische Leistung entweder in grundsätzlich relativ träge reagierende Pumpspeicherwerke oder dergleichen eingespeist werden, oder die Überkapazitäten werden mit negativem Strompreis an andere Stromnetze abgegeben, d.h. für das Abnehmen der Überkapazität muss der Abgebende den Abnehmer bezahlen.

Gemäß einer günstigen Ausgestaltung kann die erste Wärmetauscheranordnung des Latentwärmespeichers jeweils mit einer Wärmepumpeneinheit koppelbar sein. Die Wärmepumpeneinheit kann beispielsweise im Winter energetisch günstiger betrieben werden, wenn dem im Winterbetrieb abgekühlten oder sogar teilweise erstarrten Speichermedium Wärme zugeführt wird.

Gemäß einem weiteren Aspekt der Erfindung wird ein Energiespeichersystem vorgeschlagen mit wenigstens einem Latentwärmespeicher, der ein Gehäuse mit einem Speichermedium und wenigstens eine erste Wärmetauscheranordnung in Kontakt mit dem Speichermedium umfasst, wobei die wenigstens erste Wärmetauscheranordnung ein erstes Wärmeträgermedium aufweist und bei dem eine elektrische Heizeinheit zum Aufheizen des Speichermediums vorgesehen ist. Dabei sind eine oder mehrere Wärmetauscheranordnungen vorgesehen, die im Normalbetrieb Wärme in den Latentwärmespeicher einbringen.

Ein Verbund von zwei oder mehr Latentwärmespeichern ist erfindungsgemäß so gekoppelt, dass in den zwei oder mehr Latentwärmespeicher angeordnete elektrische Heizeinheiten ansteuerbar sind, um das Speichermedium des jeweiligen Latentwärmespeichers mit elektrischer Leistung aufzuheizen. Die elektrische Heizeinheit ist von ihrer Auslegung her für einen regulären Betrieb im Speichertank, verglichen mit anderen Wärmetauscheranordnungen, die im Normalbetrieb Wärme in den Latentwärmespeicher einbringen, deutlich überdimensioniert.

Im Verhältnis zur entzogenen Wärmeleistung, etwa der Entzugsleistung einer an die erste Wärmetauscheranordnung ("Entzugswärmetauscher") angekoppelten Wärmepumpe, kann die Leistung der elektrischen Heizeinheit wenigstens um einen Faktor 10, insbesondere um einen Faktor 10 bis 100, größer als die der ersten Wärmetauscheranordnung ausgelegt sein.

Eine oder mehrere Wärmetauscheranordnungen, die im Normalbetrieb Wärme in den Latentwärmespeicher einbringen können, sind vorteilhaft so ausgelegt, dass sie etwa im gleichen Leistungsbereich wie die Entzugsleistung der Wärmepumpe liegen, günstigerweise etwas unterhalb der Entzugsleistung, bevorzugt bei etwa 50%, besonders bevorzugt bei etwa 80% der Entzugsleistung.

Im Einfamilienhausbereich kann der maximale elektrische Anschlusswert der Heizeinheit bei ca. 50 kW liegen. Er wird begrenzt durch die im Gebäude zur Verfügung stehenden elektrischen Anschlussleistung an ein Stromversorgungsnetz. Für größere, industriell oder gewerblich genutzte Speicher kann die elektrische Anschlussleistung Werte von 10 MW und mehr erreichen.

Es ergibt sich eine vorteilhafte dezentrale Speichermöglichkeit von Überkapazitäten in Stromnetzen, welche sehr schnell ansprechbar und auf einfache Weise skalierbar ist. So können regionale und überregionale Verbünde gebildet werden, um plötzlich auftretende Überkapazitäten in einem elektrischen Energieversorgungsnetz aufzunehmen, ohne allzu aufwändige Infrastrukturänderung. Der Anbieter muss nicht für die Abnahme insbesondere aus Windkraft- oder Photovoltaikanlagen häufig unvorhersehbar auftretenden Überkapazitäten zahlen. Der aufnehmende Verbraucher hat gleichzeitig den Vorteil, preiswert die Energieeffizienz seines (beispielsweise) Erdspeichers zu verbessern. Besonders günstig ist, wenn eine Wärmetauscheranordnung der Latentwärmespeicher jeweils mit Wärmepumpen gekoppelt ist.

Gerade Überkapazitäten durch ins Stromnetz eingespeiste Windkraft- und Photovoltaikenergie stehen meist überraschend, jedoch oft nur kurzzeitig an, beispielsweise für Minuten. Dadurch, dass Strom im Latentwärmespeicher als Wärme gespeichert wird, fungiert dieser als eine Art indirekter Stromspeicher. Eine daran angekoppelte Wärmepumpe benötigt nach einem derartigen Wärmeeintrag entsprechend weniger elektrische Energie zu ihrem Betrieb.

Gemäß einer günstigen Ausgestaltung können zwei oder mehr elektrische Heizeinheiten in einem Fall elektrischen Überkapazität in einem elektrischen Energieversorgungsnetz ansteuerbar sein, um das Speichermedium des jeweiligen Latentwärmespeichers mit elektrischer Leistung aufzuheizen. Vorteilhaft ist das Zusammenschalten einer großen Anzahl von derartigen Latentwärmespeichern. Beispielsweise kann einspeisungsseitig ein abnehmerseitige Schalteinrichtung, etwa ein Schütz, ansteuerbar sein, welche den Stromfluss in die elektrische Heizeinheit freigibt. Die Schalteinrichtung stellt insbesondere eine Schnittstelle zwischen einer Einspeisungsseite, welche eine elektrische Leistung zur Verfügung stellt und einer Abnehmerseite, welche die elektrische Leistung aufnimmt, dar.

Der jeweilige Latentwärmespeicher ist beispielsweise in ein Hausversorgungssystem zur Versorgung eines Hauses eingebunden und stellt über einen Wärmetauscher Wärmeenergie zur Verfügung. Selbstverständlich kann das Hausversorgungssystem mit einer Regel- und/oder Steuereinheit verbunden sein, welche so betrieben werden kann, dass das Einspeisen elektrischer Leistung bzw. Energie in die jeweilige Heizeinheit von der Aufnahmekapazität des Latentwärmespeichers abhängig ist. Gegebenenfalls kann nach einem derartigen elektrischen Ladevorgang eine Statusmeldung von der Abnehmerseite der elektrischen Überkapazität an eine entsprechende einspeisungsseitige Regel- und/oder Steuervorrichtung abgegeben werden.

Gemäß einer günstigen Ausgestaltung können die zwei oder mehr Latentwärmespeicher eines oder mehrer Hausversorgungssysteme zur Versorgung mit Wärmeenergie zugeordnet sein, und wobei ein elektrischer Hautpanschluss der einen oder mehreren Hausversorgungssystemen dazu ausgebildet sein kann, die jeweiligen elektrischen Heizeinheiten mit elektrischer Leistung zu beaufschlagen, insbesondere nahe einer maximal zulässigen Anschlussleistung des Hauptanschlusses.

So kann eine vorhandene elektrische Infrastruktur vorteilhaft genutzt werden mit minimalen Kosten für eine Erweiterung der vorhandenen Installationen, um eine elektrische Heizeinheit zur Bestromung freizuschalten oder abzuschalten.

Gemäß einer günstigen Ausgestaltung kann einspeisungsseitig eine Ansteuereinrichtung zum Ansprechen des Hautpanschlusses vorgesehen sein, um elektrische Leistung in die zwei oder mehr elektrische Heizeinheiten einzuspeisen. Beispielsweise kann eine derartige Ansteuereinrichtung ein Schaltsignal über das elektrische Versorgungsnetz senden.

Gemäß einer günstigen Ausgestaltung kann abnehmerseitig eine Regel- oder Steuereinheit vorgesehen sein, welche ein Einspeisen von elektrischer Leistung in die zwei oder mehr elektrischen Heizeinheiten regelt oder steuert

Gemäß einer günstigen Ausgestaltung kann die abnehmerseitige Regel- oder Steuereinheit dazu ausgebildet sein, ein Statussignal auszugeben, das insbesondere die Aufnahmekapazität bzw. den Ladezustand des Latentwärmespeichers widerspiegelt. Damit kann elektrische Überkapazität gezielt in eine Region, die beispielsweise klimabedingt eine höhere Aufnahmekapazität aufweist, geleitet werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen in schematischer Darstellung:
- Figur 1: eine Latentwärmespeichereinrichtung in aufgeschnittener Darstellung mit einer günstigen Anordnung von Wärmetauscheranordnungen und einer elektrischen Heizeinheit;
- Figur 2: einen Prinzipschaltplan einer Ausgestaltung eines erfindungsgemäßen Hausversorgungssystems mit einem Latentwärmespeicher und drei Wärmetauscheranordnungen;
- Figur 3: einen Prinzipschaltplan einer Ausgestaltung eines erfindungsgemäßen Energieversorgungssystems mit einer Mehrzahl von gekoppelten Hausversorgungssystemen.

### Beschreibung der Ausführungsbeispiele

Im Wesentlichen gleich bleibende Teile sind in den Figuren grundsätzlich mit den gleichen Bezugszeichen beziffert.

Im Folgenden ist die Erfindung anhand eines Latentwärmespeichers beschrieben, der beispielsweise Wasser als Speichermedium enthält. Denkbar sind jedoch auch andere Speichermedien oder Mischungen von Speichermedien.

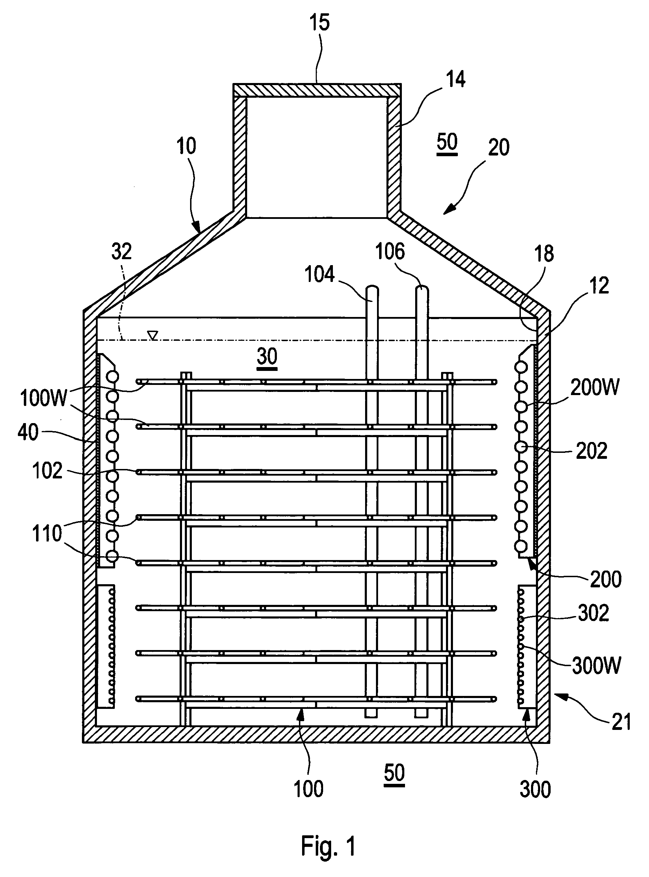

Figur 1 zeigt schematisch eine Ansicht eines aufgeschnittenen Latentwärmespeichers 10 in einer günstigen Ausgestaltung mit drei Wärmetauscheranordnungen 100, 200, 300 sowie einer elektrischen Heizeinheit 40. Der Latentwärmespeicher 10 ist ein Speichertank mit einem Gehäuse 12, das ein Speichermedium 30 enthält, das einen Phasenübergang mit Latentwärme durchführen kann. Die Komponenten 40, 100, 200, 300 sind innerhalb des Speichermediums 30 angeordnet, welches das Gehäuse 12 bis zu einem Pegel 32 füllt.

Die Heizeinheit 40 kann eine Heizpatrone sein, ein Heizdraht, eine Heizfolie oder dergleichen, vorteilhaft mit einer hohen elektrischen Anschlussleistung, die günstigerweise für den Latentwärmespeicher 10 überdimensioniert ist. Die Heizeinheit 40 dient vorteilhaft dazu, Leistungsspitzen in einem Energieversorgungsnetz aufzunehmen, insbesondere in einem Verbund einer Vielzahl von Latentwärmespeichern 10 mit derartigen Heizeinheiten 40. Im gezeigten Ausführungsbeispiel ist die Heizeinheit 40 beispielsweise als Heizfolie an der Innenwand 18 des Gehäuses befestigt.

Die dargestellte Anordnung und Ausgestaltung der einzelnen Wärmetauscheranordnungen 100, 200, 300 ermöglicht ein sehr homogenes Einfrieren und Auftauen des Speichermediums 30. Die erste Wärmetauscheranordnung 100 dient zum Entzug von Wärme und ist in einem zentralen Bereich des Latentwärmespeichers 10 angeordnet. Sie umfasst Wärmetauscherrohre 100W, vorzugsweise in Form von Rohr- oder Schlauchwicklungen. Die Wärmetauscherrohre 100W können beispielsweise U-förmig als Doppelspirale pro Ebene 110 auf einem speichenradähnlichen Montagegestell aufgewickelt sein, wobei die Basis der Doppelspirale zentral angeordnet ist und die beiden Enden der Doppelspirale sich am äußeren Umfang der Ebene 110 bzw. dem speichenradähnlichen Montagegestell befinden und z. B. zu einem Ventil oder Leitungsanschluss außerhalb des Latentwärmespeichers 10 geführt sind. Die Wärmetauscherrohre 100W können einlagig oder auch mehrlagig ausgebildet und in axial voneinander beabstandeten Ebenen 110 übereinander gestapelt. Das Material der Wärmetauscherrohre 100W kann beliebig sein, etwa Metall oder Kunststoff, wie etwa Polyethylen (PE). Die axial beabstandeten Ebenen 110 können vorteilhaft über als Verteiler oder Sammler wirkende Versorgungsrohre 104, 106 strömungstechnisch parallel vom Wärmeträgermedium 102 durchströmbar sein. Das Wärmeträgermedium 102 ist beispielsweise flüssig, etwa Sole oder dergleichen.

Das Gehäuse 12 weist einen abnehmbarer Deckel 15 mit großer Fläche auf dem Gehäuse 12 auf, der ein Absenken der Wärmeübertrager 100W in das Gehäuse 12 gestattet. Der Deckel 15 kann an einem Stutzen 14 im oberen Bereich 20 des Gehäuses 12 oberhalb der Füllstandslinie 32 angeordnet sein.

Die zweite Wärmetauscheranordnung 200 dient zur Regeneration des Speichermediums 30 und umgibt in diesem Ausführungsbeispiel die erste Wärmetauscheranordnung 100 in ihrem axial oberen Bereich koaxial. Sie ist z.B. an oder nahe einer Innenseite 18 des Gehäuses 12 des Latentwärmespeichers 10 angeordnet. Die zweite Wärmetauscheranordnung 200 besteht aus axial beabstandeten Rohren oder Schläuchen, insbesondere Wellschläuchen, die als Wärmeübertrager 200W dienen und der Kontur der Innenseite 18 des Gehäuses 12 folgen. Im Wärmeübertrager 200W wird vorteilhaft ein gasförmiges Wärmeträgermedium 202 verwendet, welches insbesondere Umgebungsluft oder Abluft sein kann. Günstig ist, ein Gefälle der Wärmeübertrager 200W zwischen Vorlauf 204 und Rücklauf 206 der zweiten Wärmetauscheranordnung 200 vorzusehen, damit im Wärmeträgermedium 202 auskondensierende Flüssigkeit gesammelt und abgeführt werden kann. Es kann auch eine dritte Wärmetauscheranordnung 300 vorgesehen sein, welche ebenfalls die erste Wärmetauscheranordnung 100 konzentrisch mit als Wärmeübertrager 300W dienenden gewundenen und axial beabstandeten Schläuchen oder Rohren umgibt, und die ebenfalls zur Regeneration des Speichermediums 30 genutzt werden kann. Das Wärmeträgermedium 302 kann beispielsweise eine Flüssigkeit sein. Die dritte Wärmetauscheranordnung 300 kann beispielsweise in einem unteren Bereich 21 des Gehäuses 12 angeordnet sein.

In dem gehäusenahen Bereich, in welchem die zweite und dritte Wärmetauscheranordnung 200 und 300 angeordnet sind, erfolgt ein Erstarren des Speichermediums 30 spät oder gar nicht.

Die Heizeinheit 40 kann vorteilhaft ebenfalls in diesen Bereichen des Speichermediums 30 angeordnet sein. Zweckmäßigerweise kann die Heizeinheit 40 mit einem gewissen Abstand zu den anderen wärmeeintragenden Wärmetauscheranordnungen 200, 300 angeordnet sein, um eine gegenseitige Beeinflussung zu vermeiden.

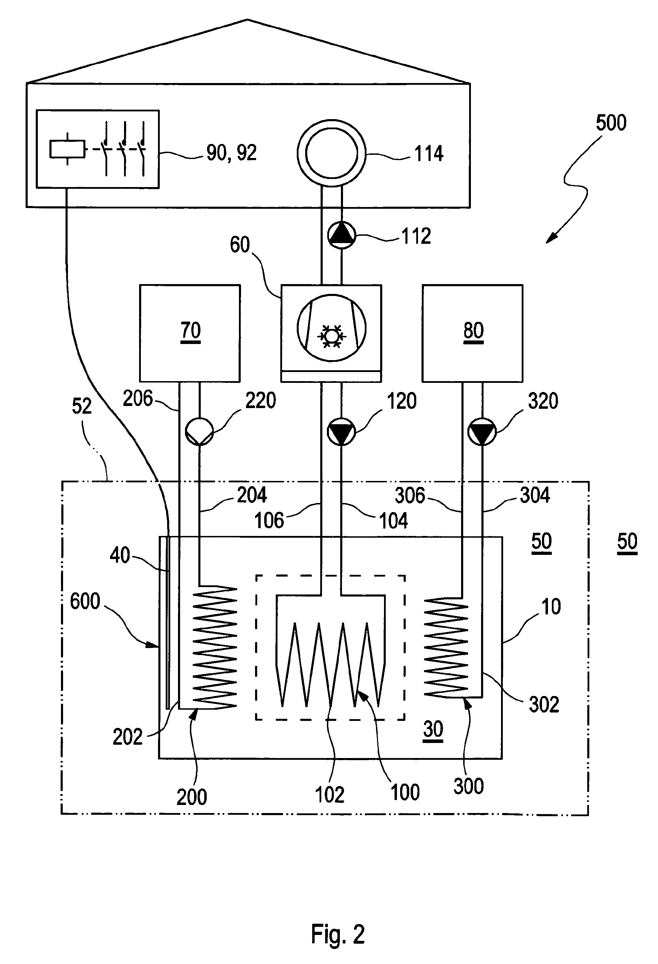

Fig. 2 zeigt einen Prinzipschaltplan einer vorteilhaften Ausgestaltung eines vorteilhaften Hausversorgungssystems 500 mit einem erfindungsgemäßen Latentwärmespeicher 10 und drei Wärmetauscheranordnungen 100, 200, 300 und elektrischer Heizeinheit 40, wie vorstehend beschrieben. Es können natürlich auch andere Arten von Latentwärmespeichern eingesetzt werden mit anderen Anordnungen und Ausgestaltungen von Wärmetauscheranordnungen.

Die Heizeinheit 40 ist mit einer Schalteinrichtung 90 verbunden (hier als Schütz symbolisiert), welche eine Bestromung der Heizeinheit 40 freigibt oder abschaltet. Darüber hinaus ist das Hausversorgungssystem 500 zweckmäßigerweise so ausgebildet, dass eine abnehmerseitige, d.h. hausversorgungssystemseitige, Regel- und/oder Steuereinheit 92 vorgesehen ist, welche ein unerwünschtes Bestromen der Heizeinheit 40 verhindern oder abbrechen kann, wenn etwa der Latentwärmespeicher 10 keine oder nur wenig Energie aufnehmen kann oder soll. Die Regel- und/oder Steuereinheit 92 kann in eine entsprechende Regel- und Steuereinheit des Hausversorgungssystems 500 integriert sein.

Der Latentwärmespeicher 10 ist beispielsweise ein umgebungsgestützter Latentwärmespeicher 10, der mit der Umgebung zumindest zeitweise gezielt im Wärmetausch steht, d.h. zumindest zeitweise ist ein Wärmefluss von der Umgebung in den Latentwärmespeicher 10 (oder aus diesem in die Umgebung) für die Funktion des Latentwärmespeichers 10 erwünscht. Beispielsweise ist der Latentwärmespeicher10 in diesem Ausführungsbeispiel im Erdreich 50 vergraben, wobei der Latentwärmespeicher10 nahe der Oberfläche angeordnet ist.

Das Bezugszeichen 52 deutet eine Systemgrenze im den Latentwärmespeicher 10 umgebenden Erdreich 50 ab und betrifft einen Bereich im Erdreich 50, der noch wesentlich Wärme in den Latentwärmespeicher 10 eintragen kann, d.h. einen typischen Wirkungsbereich zwischen der Umgebung des Latentwärmespeichers 10 und dem Latentwärmespeicher10 selbst, der typischerweise abhängig ist von Auslegungs-Parametern wie z.B. der Größe des Latentwärmespeichers 10. Das Erdreich 50 kann einerseits als Geothermie-Quelle dienen und andererseits in den üblichen Entzugsperioden, beispielsweise Heizperioden, Erdwärme an den praktisch unisolierten Latentwärmespeicher 10 liefern. Eine Isolierung und damit der Verzicht auf z.B. Erdwärme kann in gewissen Fällen vorteilhaft sein. Darüber hinaus kann das umliegende Erdreich 50 aufgrund seiner Masse und Wärmespeicherfähigkeit zeitweise sogar als Erweiterung des Latentwärmespeichers 10 dienen.

Innerhalb des Latentwärmespeichers 10 deutet die unterbrochene Linie einen typischen Wirkungsbereich der ersten Wärmetauscheranordnung 100 an, mit der Energie aus dem Latentwärmespeicher 10 entzogen wird, z.B. zum Betrieb einer Wärmepumpe 60, welche die entnommene Wärme aus dem Latentwärmespeicher 10 auf ein höheres Temperaturniveau hebt. Diese erste Wärmetauscheranordnung 100 arbeitet z. B. mit Flüssigkeit als Wärmeträgermedium 102, etwa Sole oder einem Glykol-Wasser-Gemisch, die mit einer Pumpe 120 umgewälzt wird. Die zweite Wärmetauscheranordnung 200 dient zur Regeneration des Speichermediums 30 und führt dem Latentwärmespeicher 10 Wärme zu, beispielsweise aus Umgebungsluft oder Abluft oder dergleichen.

Günstigerweise ist das Speichermedium Wasser. Denkbar sind jedoch auch andere Materialien, z.B. Paraffin, je nach gewünschtem Temperaturniveau des Speichermediums. Dem Latentwärmespeicher 10 ist Wärme auf relativ niedrigem Temperaturniveau entnehmbar.

Die Wärmepumpe 60 kann auch ein Wärmepumpensystem mit einer Mehrzahl an Wärmepumpen sein. Die Wärmepumpe 60 setzt das relativ niedrige Temperaturniveau des Speichermediums 30 des Latentwärmespeichers s 10 auf ein höheres Temperaturniveau um und versorgt, z.B. über eine Pumpe 112, einen oder mehrere Wärmeverbraucher 114, etwa ein zu beheizendes Gebäude. Die Wärmepumpeneinheit 60 kann eine Absorptions-Wärmepumpe und/oder eine Kompressions-Wärmepumpe und/oder eine andere Art von Wärmepumpe umfassen.

Eine Fördereinrichtung 220, etwa ein Ventilator, ein Gebläse, eine Umwälzpumpe oder dergleichen, ist beim Energieeintragen günstigerweise im Vorlauf 204 der Wärmetauscheranordnung 200 angeordnet, so dass die Abwärme der Fördereinrichtung 220 mit genutzt werden kann.

An den Vorlauf 204 ist eine Wärmequelle 70 z.B. in Form einer Wärme liefernden Versorgungseinrichtung 70 für das gasförmiges Medium, z.B. Umgebungsluft, Abluft oder dergleichen, zum Wärmeeintrag in den Latentwärmespeicher 10 angeschlossen. Die Versorgungseinrichtung 70 kann im einfachsten Fall zwei offene Rohrenden aufweisen, welche für Zu- und Abluft offen zur Umgebung sind.

Die optionale dritte Wärmetauscheranordnung 300 dient gleichfalls zur Regeneration des Speichermediums und zur Wärmezufuhr und weist ein flüssiges Wärmeträgermedium 302, z.B. Sole oder ein Glykol-Wasser-Gemisch auf, welches mittels einer Fördereinrichtung 320, z.B. einer Pumpe 320 umgewälzt wird. Hier wird in der Regel nur Wärmeenergie (z. B. von Solarkollektoren, Luft-Soleabsorber, Abwasserwärmetauscher, Regenwasser bzw. Regenwasserwärmetauscher und dergleichen) von einer oder mehreren Wärmequellen 80 eingetragen.

Es ist jedoch möglich, die dritte Wärmetauscheranordnung 300 auch zu Kühlzwecken einzusetzen, z.B. in der warmen Jahreszeit, solange das Speichermedium 30 noch nicht völlig regeneriert ist. Die dritte Wärmetauscheranordnung 300 ist über einen Vorlauf 304 und einen Rücklauf 306 mit der Wärmequelle 80 verbunden, wobei die Pumpe 320 günstigerweise im Vorlauf 304 angeordnet ist. Gegebenenfalls kann die Strömungsrichtung in bestimmten Betriebsphasen umgekehrt werden, so dass Vorlauf 304 als Rücklauf und Rücklauf 306 als Vorlauf dient.

Grundsätzlich ist denkbar, im Hausversorgungssystem 500 mehrere Latentwärmespeicher 10 vorzusehen, die seriell und/oder parallel geschaltet sein können. Ebenso kann ein einzelner Latentwärmespeicher 10 mit zwei oder mehr Wärmepumpen 60 gekoppelt sein, oder auch mehrere Latentwärmespeicher 10 mit einer Wärmepumpe 60.

Der Latentwärmespeicher 10 kann in der Art einer Regenwasserzisterne ausgebildet sein, die z.B. in einem Betonwerk gegossen oder in einer Formpresse aus Kunststoff hergestellt wird. Querschnitt und Form des Latentwärmespeichers 10 können beliebig gewählt werden, wie gerade benötigt, etwa als Zylinder, Quader, Kugel oder dergleichen. Der Latentwärmespeicher 10 kann einbaufertig samt Wärmetauscheranordnungen 100, 200, 300 und Heizeinheit 40 zum Einbauort geliefert werden und muss dort lediglich mit den entsprechenden Versorgungsleitungen für die verschiedenen Wärmeträgermedien, Fördereinrichtungen, Wärmequellen, Verbrauchern etc. verbunden werden.

Die skalierbare Größe und weitgehend variable Formgestaltung des Latentwärmespeichers 10 macht es günstigerweise möglich, den Latentwärmespeicher 10 z.B. im Vorgarten eines Einfamilienhauses zu vergraben, ohne dass die darüber liegen Flächen als Nutzfläche verloren gehen oder dass die Optik der Umgebung dadurch beeinträchtigt würde.

Auch können z.B. Garagen oberhalb des Latentwärmespeichers 10 errichtet werden. Der Latentwärmespeicher 10 kann bei entsprechender Formgebung und Stabilität gleichzeitig auch als Fundament oder Untergrund für eine Garage oder ein anderes Bauwerk genutzt werden.

Es kann vorteilhaft eine Vielzahl solcher Latentwärmespeiches 10 insbesondere in Wohngebieten untergebracht werden, womit sich eine hohe Speicherkapazität für elektrische Überkapazitäten ergibt.

Die mittlere Temperatur des Speichermediums 30 liegt in der Entzugsperiode bei oder unterhalb der Temperatur des den Latentwärmespeicher 10 umgebenden Materials, z.B. Erdreich 50. Das zum Heizen nutzbare Temperaturniveau des Latentwärmespeichers 10 bzw. des Speichermediums 30 sinkt in der Entzugsperiode ab. Sinkt die Temperatur des Speichermediums 30 beispielsweise auf 2°C ab, kann mit dem zweiten, gasförmigen Wärmeträgermedium 202 noch mit Temperaturen etwas oberhalb von 2°C Energie in das Speichermedium 30 eingetragen werden. Damit kann beispielsweise Abluft einer Lüftungsanlage für Gebäude genutzt werden, selbst wenn diese bereits entwärmt ist und mit nur 6-7°C zur Verfügung steht. Luft kann direkt genutzt werden, ohne Zwischenschalten von Luft-Sole-Wärmetauschern und die damit einhergehenden Verluste.

Es zeigt sich, dass elektrische Überkapazitäten gerade im Winter häufiger auftreten, so dass gerade dann der Latentwärmespeicher 10 besonders viel Energie aufnehmen kann.

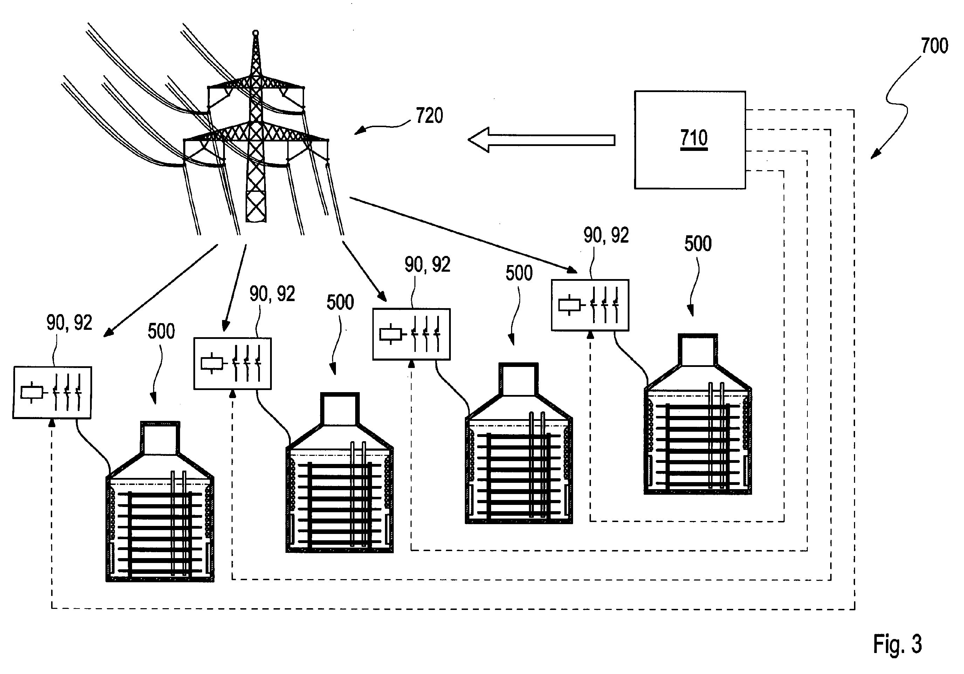

Figur 3 zeigt einen Prinzipplan einer Ausgestaltung eines erfindungsgemäßen Energieversorgungssystems 700 mit einer Mehrzahl von gekoppelten Hausversorgungssystemen 500 mit je einem (oder auch mehreren) Latentwärmespeicher 10, in dem eine elektrische Heizeinheit 40 angeordnet ist.

Die elektrischen Heizeinheiten 40 sind im Fall einer elektrischen Überkapazität in einem elektrischen Energieversorgungsnetz 720 ansteuerbar, um das Speichermedium 30 des jeweiligen Latentwärmespeichers 10 mit elektrischer Leistung aufzuheizen. Dazu kann eine einspeisungsseitige Ansteuereinrichtung 710 den jeweiligen Hautpanschlusses 90 der Hausversorgungssysteme 500 ansprechen und die entsprechende Schalteinheit 92 schalten, um elektrische Leistung in die elektrischen Heizeinheiten 40 einzuspeisen.

Eine abnehmerseitige Regel- oder Steuereinheit 92 regelt oder steuert das Einspeisen der elektrischen Leistung jeweilige elektrische Heizeinheiten 40 und unterbindet ein Einspeisen der elektrischen Leistung oder bricht dieses ab, wenn der Latentwärmespeicher 10 keine oder nicht ausreichend Energie aufnehmen kann. Die Regel- oder Steuereinheit 92 kann dazu ausgebildet sein, ein Statussignal zum Zustand des Latentwärmespeichers 10 auszugeben. Damit kann einspeisungsseitig ein Energiestrom vorzugsweise dahin gelenkt werden, wo eine große Aufnahmekapazität verfügbar ist.

Durch das Zusammenschalten einer Vielzahl solcher Hausversorgungssysteme 500 kann zum einen eine außerordentlich hohe Speicherkapazität von Überkapazitäten geschaffen werden, welche sehr schnell ansprechbar ist und die in kurzer Zeit eine hohe Leistung aufnehmen kann.

Im Zeitraum zwischen September 2008 und März 2009 fielen in Deutschland etwa 17 GW an überschüssiger Leistung aus z.B. Windkraft und Photovoltaikanlagen an.

Ein Latentwärmespeicher 10 (Fig. 1) in einem typischen, für ein Einfamilienhaus konzipierten Hausversorgungssystem 500 enthält beispielsweise 10000 Liter Wasser als Speichermedium 30. Ein Betrieb einer daran angekoppelten Wärmepumpe 60 (Fig. 2) ist im Temperaturbereich zwischen 0°C bis maximal etwa 40°C wirtschaftlich. Beim Phasenwechsel des Speichermediums Wasser von flüssig zu fest sind z.B. 1000 kWh gespeichert. Um das gefrorene Wasser beispielsweise innerhalb weniger Stunden, z.B. 10 Stunden, aufzutauen, ist eine Aufnahme von 100 kW notwendig.

Bei einer entsprechenden Anzahl von derartigen Hausversorgungssystemen 500 in einem Verbund kann von diesem Verbund ersichtlich eine hohe Leistung aufgenommen werden.

## Patentansprüche

1. Latentwärmespeicher (10) umfassend ein Gehäuse (12) enthaltend ein Speichermedium (30) mit Latentwärme-Phasenübergang und wenigstens eine erste Wärmetauscheranordnung (100) in Kontakt mit dem Speichermedium (30), wobei die wenigstens erste Wärmetauscheranordnung (100) ein erstes Wärmeträgermedium (102) aufweist, und wobei eine elektrische Heizeinheit (40) im Kontakt mit dem Speichermedium (30) zum Aufheizen des Speichermediums (30) vorgesehen ist, wobei eine oder mehrere Wärmetauscheranordnungen (200, 300) vorgesehen sind, die im Normalbetrieb Wärme in den Latentwärmespeicher (10) einbringen, **dadurch gekennzeichnet, dass** die elektrische Heizeinheit (40) von ihrer Auslegung her für einen regulären Betrieb im Speichertank (10), verglichen mit der einen oder den mehreren Wärmetauscheranordnungen (200, 300), die im Normalbetrieb Wärme in den Latentwärmespeicher (10) einbringen, deutlich überdimensioniert ist.

2. Latentwärmespeicher nach Anspruch 1, **dadurch gekennzeichnet, dass** die Heizeinheit (40) hinsichtlich ihrer Leistung um wenigstens einen Faktor zehn größer ausgelegt ist als eine Wärmetauscheranordnung (100), die im Normalbetrieb Wärme aus dem Latentwärmespeicher (10) entzieht.

3. Latentwärmespeicher nach Anspruch 1 oder 2, **dadurch gekennzeichnet, dass** die elektrische Heizeinheit (40) eine elektrische Anschlussleistung von mindestens 5 kW, insbesondere zwischen 5 und 100 kW aufweist.

4. Latentwärmespeicher nach einem der vorhergehenden Ansprüche, **dadurch gekennzeichnet, dass** die elektrische Heizeinheit (40) in einem Bereich an oder nahe einer Innenseite (18) des Gehäuses (12) angeordnet ist, in welchem Bereich das Speichermedium (30) seinen Phasenübergang bei Normalbetrieb im Durchschnitt später als in einem zentralen Bereich innerhalb des Gehäuses (12) oder gar nicht durchführt.

5. Latentwärmespeicher nach einem der vorhergehenden Ansprüche, **dadurch gekennzeichnet, dass** die elektrische Heizeinheit (40) im Fall elektrischer Überkapazität in einem elektrischen Energieversorgungsnetz (600) zur Aufnahme elektrischer Energie ansteuerbar ist.

6. Latentwärmespeicher nach einem der vorhergehenden Ansprüche, **dadurch gekennzeichnet, dass** die erste Wärmetauscheranordnung (100) des Speichertanks (10) mit einer Wärmepumpeneinheit (60) gekoppelt oder koppelbar ist.

7. Latentwärmespeicher nach einem der vorhergehenden Ansprüche, **dadurch gekennzeichnet, dass** innerhalb des Gehäuses (12) wenigstens die zweite Wärmetauscheranordnung (200) mit einem zweiten Wärmeträgermedium (202) angeordnet ist, welche wenigstens bereichsweise die erste Wärmetauscheranordnung (100) umgibt.

8. Latentwärmespeicher nach einem der vorhergehenden Ansprüche, **dadurch gekennzeichnet, dass** das Gehäuse (12) zum Einbau ins Erdreich (50) vorgesehen ist.

9. Energiespeichersystem (700) mit wenigstens einem Latentwärmespeicher (10), insbesondere nach einem der Ansprüche 1 bis 8, umfassend ein Gehäuse (12) mit einem Speichermedium (30) und wenigstens eine erste Wärmetauscheranordnung (100) in Kontakt mit dem Speichermedium (30), wobei die wenigstens erste Wärmetauscheranordnung (100) ein erstes Wärmeträgermedium (102) aufweist, und wobei eine oder mehrere Wärmetauscheranordnungen (200, 300) vorgesehen sind, die im Normalbetrieb Wärme in den Latentwärmespeicher (10) einbringen, **dadurch gekennzeichnet, dass** ein Verbund von zwei oder mehr Latentwärmespeichern (10) so gekoppelt ist, dass jeweils in den zwei oder mehr Latentwärmespeichern (10) angeordnete elektrische Heizeinheiten (40) in Kontakt mit dem Speichermedium (30) sind und ansteuerbar sind, um das Speichermedium (30) des jeweiligen Latentwärmespeichers (10) mit elektrischer Leistung aufzuheizen, wobei die elektrische Heizeinheit (40) von ihrer Auslegung her für einen regulären Betrieb im Speichertank (10), verglichen mit der einen oder den mehreren Wärmetauscheranordnungen (200, 300), die im Normalbetrieb Wärme in den Latentwärmespeicher (10) einbringen, deutlich überdimensioniert ist.

10. Energiespeichersystem nach Anspruch 9, **dadurch gekennzeichnet, dass** zwei oder mehr der elektrischen Heizeinheiten (40) im Fall einer elektrischen Überkapazität in einem elektrischen Energieversorgungsnetz (720) ansteuerbar sind, um das Speichermedium (30) des jeweiligen Latentwärmespeichers (10) mit elektrischer Leistung aufzuheizen.

11. Energiespeichersystem nach Anspruch 9 oder 10, **dadurch gekennzeichnet, dass** die zwei oder mehr Speichertanks (10) einem oder mehren Hausversorgungssystemen (500) zur Versorgung mit Wärmeenergie zugeordnet sind, und wobei ein elektrischer Hautpanschluss (90) der einen oder mehreren Hausversorgungssysteme (500) dazu ausgebildet ist, die jeweiligen elektrischen Heizeinheiten (40) mit elektrischer Leistung zu beaufschlagen, insbesondere nahe einer maximal zulässigen Anschlussleistung des Hauptanschlusses (90).

12. Energiespeichersystem nach einem der Ansprüche 9 bis 11, **dadurch gekennzeichnet, dass** einspeisungsseitig eine Ansteuereinrichtung zum Ansprechen des Hautpanschlusses (90) vorgesehen ist, um elektrische Leistung in die zwei oder mehr elektrische Heizeinheiten (40) einzuspeisen.

13. Energiespeichersystem nach einem der Ansprüche 9 bis 12, **dadurch gekennzeichnet, dass** abnehmerseitig eine Regel- oder Steuereinheit (92) vorgesehen ist, welche ein Einspeisen von elektrischer Leistung in die zwei oder mehr elektrische Heizeinheiten (40) regelt oder steuert.

14. Energiespeichersystem nach Anspruch 13, **dadurch gekennzeichnet, dass** die Regel- oder Steuereinheit (92) ausgebildet ist, ein Statussignal zum Zustand des Latentwärmespeichers (10) auszugeben.

## Claims

1. Latent heat storage device (10) comprising a housing (12) containing a storage medium (30) with latent heat phase transition and at least one first heat exchanger arrangement (100) in contact with the storage medium (30), where the at least one first heat exchanger arrangement (100) has a first heat carrier medium (102) and where an electric heating unit (40) in contact with the storage medium (30) is provided to heat up said storage medium (30), where one or more heat exchanger arrangements (200, 300) are provided which in normal operation transfer heat into the latent heat storage device (10), **characterized in that** the electric heating unit (40) is considerably oversized in terms of its design for regular operation in the storage tank (10) when compared with the one or more heat exchanger arrangements (200, 300) transferring heat into the latent heat storage device (10) in normal operation.

2. Latent heat storage device according to claim 1, **characterized in that** the heating unit (40) is designed larger by at least a factor of ten, in terms of its output, than a heat exchanger arrangement (100) which draws heat out of the latent heat storage device (10) in normal operation.

3. Latent heat storage device according to claim 1 or 2, **characterized in that** the electric heating unit (40) has an electrical connected load of at least 5 kW and in particular between 5 and 100 kW.

4. Latent heat storage device according to one of the preceding claims, **characterized in that** the electric heating unit (40) is arranged in a region on or close to an inner side (18) of the housing (12), in which region the storage medium (30) during normal operation performs its phase transition on average later than in a central region inside the housing (12), or not at all.

5. Latent heat storage device according to one of the preceding claims, **characterized in that** the electric heating unit (40) can be actuated to absorb electrical energy in the event of an electrical overcapacity in an electrical energy supply network (600).

6. Latent heat storage device according to one of the preceding claims, **characterized in that** the first heat exchanger arrangement (100) of the storage tank (10) is connected or is connectable to a heat pump unit (60).

7. Latent heat storage device according to one of the preceding claims, **characterized in that** at least the second heat exchanger arrangement (200) with a second heat carrier medium (202) is arranged inside the housing (12) and surrounds the first heat exchanger arrangement (100) in least in some regions.

8. Latent heat storage device according to one of the preceding claims, **characterized in that** the housing (12) is designed for installation in the soil (50).

9. Energy storage system (700) having at least one latent heat storage device (10), in particular according to one of claims 1 to 8, comprising a housing (12) with a storage medium (30) and at least one first heat exchanger arrangement (100) in contact with the storage medium (30), where the at least one first heat exchanger arrangement (100) has a first heat carrier medium (102) and where one or more heat exchanger arrangements (200, 300) are provided which in normal operation transfer heat into the latent heat storage device (10), **characterized in that** a combination of two or more latent heat storage devices (10) is connected such that electric heating units (40) arranged in each of the two or more latent heat storage devices (10) are in contact with the storage medium (30) and can be actuated to heat up the storage medium (30) of the respective latent heat storage device (10) with electric power, where the electric heating unit (40) is considerably oversized in terms of its design for regular operation in the storage tank (10) when compared with the one or more heat exchanger arrangements (200, 300) which in normal operation transfer heat into the latent heat storage device (10).

10. Energy storage system according to claim 9, **characterized in that** two or more of the electric heating units (40) can in the event of electrical overcapacity in an electrical energy supply network (720) be actuated to heat up the storage medium (30) of the respective latent heat storage device (10) with electric power.

11. Energy storage system according to claim 9 or 10, **characterized in that** the two or more storage tanks (10) are assigned to one or more building supply systems (500) for supplying heat energy, where an electrical main connection (90) of the one or more building supply systems (500) is designed to apply electric power to the respective electric heating units (40), in particular when approaching a maximum permissible connected load of the main connection (90).

12. Energy storage system according to one of claims 9 to 11, **characterized in that** on the input side an actuating device is provided for actuating the main connection in order to feed electric power to the two or more electric heating units (40).

13. Energy storage system according to one of claims 9 to 12, **characterized in that** on the consumer side a regulation or control unit (92) is provided which regulates or controls an input of electric power into the two or more electric heating units (40).

14. Energy storage system according to claim 13, **characterized in that** the regulation or control unit (92) is designed to emit a status signal on the state of the latent heat storage device (10).

## Revendications

1. Accumulateur de chaleur latente (10) comprenant un corps (12) contenant un agent accumulateur (30) avec point de transition de phase à chaleur latente, et au moins un premier dispositif échangeur de chaleur (100) en contact avec l'agent accumulateur (30), sachant que l'au moins premier dispositif échangeur de chaleur (100) présente un premier agent caloporteur (102), et qu'est prévue une unité de chauffage électrique (40) en contact avec l'agent accumulateur (30) pour chauffer l'agent accumulateur (30), qu'est/sont prévu(s) un ou plusieurs dispositif(s) échangeur(s) de chaleur (200, 300) qui, en fonctionnement normal, apporte(nt) de la chaleur dans l'accumulateur de chaleur latente (10), **caractérisé en ce que** l'unité de chauffage électrique (40) est, de par sa conception, nettement surdimensionnée pour un fonctionnement régulier dans le réservoir d'accumulation (10), comparativement à l'un ou aux plusieurs dispositif(s) échangeur(s) de chaleur (200, 300) qui, en fonctionnement normal, apporte(nt) de la chaleur dans l'accumulateur de chaleur latente (10).

2. Accumulateur de chaleur latente selon la revendication 1, **caractérisé en ce qu'**au niveau de sa puissance, l'unité de chauffage (40) est dimensionnée plus grande d'au moins un facteur dix qu'un dispositif échangeur de chaleur (100) qui, en fonctionnement normal, extrait de la chaleur de l'accumulateur de chaleur latente (10).

3. Accumulateur de chaleur latente selon la revendication 1 ou 2, **caractérisé en ce que** l'unité de chauffage électrique (40) présente une puissance électrique connectée d'au moins 5 kW, en particulier comprise entre 5 et 100 kW.

4. Accumulateur de chaleur latente selon l'une des revendications précédentes, **caractérisé en ce que** l'unité de chauffage électrique (40) est placée dans une zone sur une ou à proximité d'une face intérieure (18) du corps (12), zone dans laquelle en fonctionnement normal l'agent accumulateur (30) effectue sa transition de phase en moyenne plus tard que dans une zone centrale à l'intérieur du corps (12), ou ne l'effectue pas du tout.

5. Accumulateur de chaleur latente selon l'une des revendications précédentes, **caractérisé en ce que** l'unité de chauffage électrique (40) peut être activée en cas de surcapacité électrique dans un réseau d'alimentation en énergie électrique (600) pour absorber de l'énergie électrique.

6. Accumulateur de chaleur latente selon l'une des revendications précédentes, **caractérisé en ce que** le premier dispositif échangeur de chaleur (100) du réservoir d'accumulation (10) est couplé ou peut être couplé à une unité de pompe à chaleur (60).

7. Accumulateur de chaleur latente selon l'une des revendications précédentes, **caractérisé en ce qu'**à l'intérieur du corps (12) est placé au moins le deuxième dispositif échangeur de chaleur (200) avec un deuxième agent caloporteur (202), qui de préférence entoure au moins partiellement le premier dispositif échangeur de chaleur (100).

8. Accumulateur de chaleur latente selon l'une des revendications précédentes, **caractérisé en ce que** le corps (12) est prévu pour être installé dans le sol (50).

9. Système d'accumulation d'énergie (700) avec au moins un accumulateur de chaleur latente (10), en particulier selon l'une des revendications 1 à 8, comprenant un corps (12) avec un agent accumulateur (30) et au moins un premier dispositif échangeur de chaleur (100) en contact avec l'agent accumulateur (30), sachant que l'au moins premier dispositif échangeur de chaleur (100) présente un premier agent caloporteur (102), et qu'est/que sont prévu(s) un ou plusieurs dispositif(s) échangeur(s) de chaleur (200, 300) qui, en fonctionnement normal, apporte(nt) de la chaleur dans l'accumulateur de chaleur latente (10), **caractérisé en ce qu'**un assemblage de deux ou plus accumulateurs de chaleur latente (10) est couplé de manière telle que chacune des unités de chauffage électriques (40) placées dans les deux ou plus accumulateurs de chaleur latente (10) sont en contact avec l'agent accumulateur (30) et peuvent être activés pour chauffer par puissance électrique l'agent accumulateur (30) des accumulateurs de chaleur latente (10) respectifs, sachant que l'unité de chauffage électrique (40) est, de par sa conception, nettement surdimensionnée pour un fonctionnement régulier dans le réservoir d'accumulation (10), comparativement à l'un ou aux plusieurs dispositif(s) échangeur(s) de chaleur (200, 300) qui, en fonctionnement normal, apporte(nt) de la chaleur dans l'accumulateur de chaleur latente (10).

10. Système d'accumulation d'énergie selon la revendication 9, **caractérisé en ce que** deux ou plus unités de chauffage électriques (40) peuvent être activées en cas de surcapacité électrique dans un réseau d'alimentation en énergie électrique (720) afin de chauffer par puissance électrique l'agent accumulateur (30) des accumulateurs de chaleur latente (10) respectifs.

11. Système d'accumulation d'énergie selon la revendication 9 ou 10, **caractérisé en ce que** les deux ou plus réservoirs d'accumulation (10) sont associés à un ou plusieurs système(s) d'alimentation de bâtiments (500) en énergie thermique, et qu'un raccordement électrique principal (90) de l'un ou des plusieurs système(s) d'alimentation de bâtiments (500) est conçu pour alimenter les unités de chauffage électriques (40) respectives en puissance électrique, en particulier en approchant une puissance connectée maximale autorisée du raccordement principal (90).

12. Système d'accumulation d'énergie selon l'une des revendications 9 à 11, **caractérisé en ce que** du côté alimentation est prévu un dispositif de commande pour activer le raccordement principal (90) afin d'injecter de la puissance électrique dans les deux ou plus unités de chauffage électriques (40).

13. Système d'accumulation d'énergie selon l'une des revendications 9 à 12, **caractérisé en ce que** du côté consommateur est prévue une unité de commande ou de régulation (92) qui régule ou commande une injection de puissance électrique dans les deux ou plus unités de chauffage électriques (40).

14. Système d'accumulation d'énergie selon la revendication 13, **caractérisé en ce que** l'unité de commande ou de régulation (92) est conçue pour émettre un signal d'état indiquant l'état de l'accumulateur de chaleur latente (10).
